(19) Europäisches Patentamt
European Patent Office
Office européen des brevets

(11) Publication number: 0 251 589 A2

(12) EUROPEAN PATENT APPLICATION

(21) Application number: 87305445.6

(22) Date of filing: 19.06.87

(51) Int. Cl.4: C01B 33/28 , C01B 35/12 , C01B 33/20 , C01G 17/00 , C01G 30/02 , C01G 29/00 , C01G 49/00 , C01G 37/14 , C01G 23/00 , C01G 19/00 , C01G 25/00

(30) Priority: 26.06.86 US 878555

(43) Date of publication of application: 07.01.88 Bulletin 88/01

(84) Designated Contracting States: AT BE DE FR GB IT NL SE

(71) Applicant: MOBIL OIL CORPORATION
150 East 42nd Street
New York New York 10017(US)

(72) Inventor: Von Ballmoos, Roland
144 East Delaware Avenue
Pennington New Jersey 08534(US)

(74) Representative: Colmer, Stephen Gary
Patent Department c/o Mobil Services
Company Limited Mobil Court 3 Clements
Inn
London WC2A 2EB(GB)

(54) **Synthesis of crystalline binary oxides.**

(57) Crystalline binary oxides are prepared by hydrothermal crystallization utilizing a two-phase reaction mixture comprising an aqueous phase and a substantially water-immiscible organic phase wherein the source of at least one of the oxides is dissolved or dispersed in the organic phase.

EP 0 251 589 A2

# SYNTHESIS OF CRYSTALLINE BINARY OXIDES

This invention relates to a method for synthesizing crystalline binary oxides.

Binary oxides are conventionally synthesized from reaction mixtures comprising a single liquid phase, normally an aqueous phase. For example, the crystalline silicate ZSM-5 is a binary oxide when the structure consists predominantly of aluminum and silicon oxides and, as described in U.S. Patent 3,702,886, is conventionally prepared from a single phase aqueous reaction mixture containing the tetrapropylammonium cation as a directing agent.

According to the present invention, there is provided a method for synthesizing a crystalline binary oxide which comprises:

(i) providing a reaction mixture capable of forming said crystalline binary oxide comprising water, a substantially water-immiscible organic solvent (So), a directing agent (D), a trivalent element (X) selected from the group consisting of $Al^{+3}$, $B^{+3}$, $Ga^{+3}$, $In^{+3}$, $Sb^{+3}$, $Bi^{+3}$, $Fe^{+3}$, $Cr^{+3}$, $Sc^{+3}$, $Y^{+3}$, $La^{+3}$, $Ti^{+3}$ and combinations thereof and quadrivalent element (Z) selected from the group consisting of $Si^{+4}$, $Ge^{+4}$, $Sn^{+4}$, $Ti^{+4}$, $Zr^{+4}$ and combinations thereof, the molar composition of said mixture, based on one mole of Z, being:

$H_2O$ = 0.5 to 50
So = 0.1 to 20
D = 0.005 to 30
X = 0.00002 to 0.2
Z = 1

wherein upon initial provision of said reaction mixture the source of at least one of X and Z is dispersed or dissolved in the substantially water-immiscible organic solvent,

(ii) heating said reaction mixture at a rate of 5°C to 200°C per hour to a temperature of 80°C to 300°C,

(iii) agitating the reaction mixture to admix the aqueous and organic phases,

(iv) maintaining said reaction mixture at said temperature of 80°C to 300°C until crystals of said binary oxide are formed, and

(v) recovering said crystalline binary oxide having a composition on an anhydrous basis as follows:

$A_v(Cat)_c[X_xZ_{(1-x)}O_2]$

wherein A is occluded organic material residing in microporous voids of the binary oxide, v is moles of A, Cat is cations associated with the binary oxide, q is the average charge of Cat, x is a number less than or equal to 0.14 and c is x/q.

Thus the present invention is concerned with the production of binary oxides which, in the anhydrous state obey the following formula:

$A_v(Cat)_c[X_xZ_{(1-x)}O_2]$

wherein "v" is moles of "A", occluded organic material resulting from organic directing agent and/or solvent used in synthesis of and filling microporous voids of the binary oxide, which material may be removed upon calcination, "Cat" represents the cation(s) associated with the structure with "c" = x/q, where "x" is a number less than or equal to about 0.14, preferably from about 0.00004 to 0.09, and "q" is the average charge of the cation(s) (Cat), "X" is a trivalent element selected from the group consisting of $Al^{+3}$, $B^{+3}$, $Ga^{+3}$, $In^{+3}$, $Sb^{+3}$, $Bi^{+3}$, $Fe^{+3}$, $Cr^{+3}$, $Sc^{+3}$, $Y^{+3}$, $La^{+3}$, $Ti^{+3}$ and combinations thereof and "Z" is a quadrivalent element selected from the group consisting of $Si^{+4}$, $Ge^{+4}$, $Sn^{+4}$, $Ti^{+4}$, $Zr^{+4}$ and combinations thereof.

The atomic ratio of Z/X of the binary oxide prepared hereby will be greater than about 6, preferably from 10 to 25,000. Therefore, the molar ration of $ZO_2/X_2O_3$ of the binary oxide will be greater than about 12, preferably from 20 to 50,000.

The composition of the crystalline binary oxide, following removal of the organic component, for example by calcination, is the following:

$(Cat)_c[X_xZ_{(1-x)}O_2]$

where all symbols and letters have their aforementioned meanings. The formula for the framework of the material prepared hereby is $[X_xZ_{(1-x)}O_2]^{x-}$.

The present invention seeks to provide an improved method for synthesising such crystalline binary oxides by effecting hydrothermal crystallization of a reaction mixture comprising two liquid phases, namely an aqueous phase and a substantially water-immiscible organic phase, with at least one of the sources of the X or Z being initially dissolved or dispersed in the organic phase.

The use of a two-phase synthesis reaction mixture system, exclusive of the solids, including a substantially water-immiscible organic solvent, enables one to maintain in solution in the organic solvent one or more of the reactants which are normally insoluble or unstable in the aqueous phase under the present synthesis conditions. Such a procedure enables the preparation of desired binary oxides. Further, microporous properties can be achieved for the crystalline binary oxides by performing inorganic syntheses in the presence of organic directing agents. In addition to its templating role, the organic directing agent can also act as a surfactant. It can help the codispersion of the organic and aqueous phases containing the reagents.

The present method permits synthesis of zeolites at near-neutral pH, thereby enabling introduction of directing agents which are unstable under normal high pH synthesis conditions. Also, the high dispersion of reagents at the interface of the aqueous and organic phases leads to homogeneous nucleation and controlled crystal growth, resulting in smaller particles generally.

In the synthesis method of the present invention, the reaction mixture will comprise sources of elements X and Z, directing agent(s) D, and a substantially water-immiscible organic solvent (So) as defined above. Other cations, e.g. alkali metal or ammonium, may or may not be added depending on such factors as pH control, etc. Directing agent D is defined to include seeds having the crystal structure of the desired product binary oxide.

The overall molar composition of the two-phase synthesis mixture in terms of So, D, $H_2O$, X and Z, based on one mole of Z, is:

$(0.1\text{-}20)So:(0.5\text{-}50)H_2O:(0.005\text{-}30)D:(0.00002\text{-}0.2)X:Z.$

The preferred molar composition of the two-phase mixture based on one mole of Z, is:

$(0.2\text{-}10)So:(1.0\text{-}20)H_2O:(0.01\text{-}5)D:(0.00004\text{-}0.16)X:Z.$

The organic directing agent D is selected according to the binary oxide to be produced from the group consisting of organic mono-, di-or polyamines and onium compounds having the following formula:

$R_4E^+(An)^-$ or $(R_3E^+R'E^+R_3)2(An)^-$

wherein R or R' is alkyl of from 1 to 20 carbon atoms, heteroalkyl of from 1 to 20 carbon atoms, aryl, heteroaryl, cycloalkyl of from 3 to 6 carbon atoms, cycloheteroalkyl of from 3 to 6 carbon atoms, or combinations thereof; E is a tetracoordinate element (e.g. nitrogen, phosphorus) or a heteroatom (e.g. N, O, S, Se, P, As, etc.) in an alicyclic, heteroalicyclic or heteroaromatic structure; and "(An)" is an anion (e.g. fluoride, chloride, bromide, iodide, hydroxide, acetate, sulfate, carboxylate, etc.). When E is a heteroatom in an alicyclic, heteroalicyclic or heteroaromatic structure, such structure may be, as non-limiting examples,

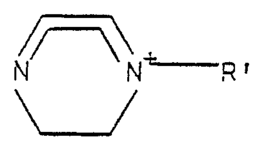, or

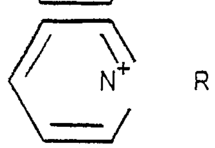

wherein R' is alkyl of from 1 to 20 carbon atoms, heteroalkyl of from 1 to 20 carbon atoms, aryl, heteroaryl, cycloalkyl of from 3 to 6 carbon atoms or cycloheteroalkyl of from 3 to 6 carbon atoms. The directing agent, depending on its solubility, may appear initially in either the organic or aqueous phase of the reaction mixture.

Particularly preferred directing agents for the present method include alkylamines wherein alkyl is of 1 to 3 carbon atoms and onium compounds, above defined, wherein R is alkyl of 1 to 4 carbon atoms. R' is alkyl of 1 to 6 carbon atoms, E is nitrogen and (An) is halide or hydroxide. Non-limiting examples of these include di-n-propylamine, tetrapropylammonium hydroxide, tetraethylammonium hydroxide and tetrapropylammonium bromide, and hexamethyl-hexane diammonium hydroxide or bromide.

Useful sources of elements X and Z include, as non-limiting examples, any known form of oxide or hydroxide, organic or inorganic esters and salts of X or Z or other organic compounds containing X or Z.

The substantially water-immiscible organic solvent may be, for example, one or more compounds selected from the group consisting of alcohosl, e.g. organic hydroxy compounds including alkanols of from 5 to 10 carbon atoms, ethers containing 5 to 10 carbon atoms, petroleum ether, hydrocarbons and the like. Polar solvents such as the alcohols are preferred.

The aqueous phase of the reaction mixture comprises from the sources of X and Z those not included in the organic phase.

In a more specific but non-limiting illustration of the present synthesis method, the aqueous phase contains the source of X, for example aluminum or indium nitrate or alumina. The substantially water-immiscible solvent, e.g. hexanol, contains the element Z source, as, for example, its tetra-orthoalkoxide. The organic directing agent, e.g. tetraalkylammonium hydroxide also acts as a surfactant to emulsify the aqueous and organic phases and optimize the interface. Z is progressively supplied during synthesis to the gel by hydrolysis of the tetra-orthoalkoxide and transfer of the Z-containing hydrolysate through the interface into the aqueous phase.

As elements X and Z must be available simultaneously to nucleate and crystallize binary oxide, the rates of supply of both elements have to be comparable.

Because the hydrolysis and transfer rates of the organic solvent soluble source are controlled by the magnitude of the interface, its incorporation is expected to be favored as mixing of the reactants or stirring of the reaction mixture is increased.

The reaction mixture, as initially provided, contains at least one of the sources of the X or Z element, as herein defined, dissolved or dispersed in the organic solvent layer. The reaction mixture is then heated carefully at a rate of from 5°C to 200°C per hour up to a temperature of from 80°C to 300°C and maintained within that temperature range until crystals of desired binary oxide form, usually after 2 hours to 500 hours. The reactants are mixed during heating by spinning the reaction vessel, stirring or other conventional means for effecting mixing to admix the components of the reaction mixture and the water-immiscible organic solvent layer and the aqueous layer with each other. The pH of the reaction mixture during crystallization is carefully maintained at from 6 to 14, preferably between 8 and 13, and more preferably from 8 to 10. This may be accomplished by adjusting the concentration of the added base(s). The added base may be an inorganic base such as NaOH and/or a quaternary ammonium hydroxide. Other inorganic bases or salts can also be present and/or be used to adjust the pH of the reaction mixture, non-limiting examples of which include KOH, CsOH, $Ca(OH)_2$, NaCl, CsBr, and the like. The cations, particularly alkali metal cations, anions and particularly monovalent anions such as halide and hydroxide, of these inorganic salts may be incorporated into the binary oxide product.

Following crystallization of the desired binary oxide, the reaction mixture containing same is filtered and the recovered crystals are washed, for example with water, and then dried, such as by heating at from about 25°C to about 150°C at atmospheric pressure.

The method of the present invention has the advantage of simplicity in operation and generally provides a homogeneous structure having the element X relatively uniformly distributed throughout the structure. The crystalline binary oxides prepared hereby may be molecular sieves or other framework structure, in which case they will possess definite distinguishing crystalline structures which exhibit characteristic X-ray powder diffraction patterns. One such structure is that of ZSM-5 (U.S. Patent 3,702,886). The binary oxide of this invention may contain small amounts, e.g. impurity levels, of other elements which are not intentionally added to the reaction mixture of up to about 600 ppm.

The binary oxides synthesized hereby can be used as catalysts in intimate combination with a metal component such as silver, tungsten, vanadium, molybdenum, rhenium, chromium, manganese, or a Group VIII metal such as platinum or palladium where for example a hydrogenation-dehydrogenation or oxidation function is to be performed. Such component can be ion-exchanged into the composition, impregnated therein or intimately physically admixed therewith. Such component can be impregnated in or onto it such as for example, by, in the case of platinum, treating the crystal with a solution containing a platinum metal-containing ion. Thus, suitable platinum compounds include chloroplatinic acid, platinum chloride and various compounds containing the platinum amine complex.

The original cations of the as synthesized binary oxides can be replaced in accordance with techniques well known in the art, at least in part, by ion exchange with other cations. Preferred replacing cations include metal ions, hydrogen ions, hydrogen precursor, e.g. ammonium, ions and mixtures thereof. Particularly preferred cations include hydrogen, rare earth metals and metals of Groups IIA, IIIA, IVA, IB, IIB, IIIB, IVB, VIB and VIII of the Periodic Table of the Elements.

A typical ion exchange technique would be to contact the synthetic crystalline binary oxide with a salt of the desired replacing ion or ions. Examples of such salts of cations include the halides, e.g. chlorides, nitrates and sulfates.

The binary oxide prepared in accordance herewith may beneficially be subjected to thermal treatment. This thermal treatment is generally performed by heating at a temperature of at least 350°C for at least 1 minute and generally not longer than 20 hours. While subatmospheric pressure can be employed for the thermal treatment, atmospheric pressure is desired for reasons of convenience. The thermal treatment can be performed at a temperature up to about 1000°C. The thermally treated product is particularly useful in the catalysis of certain hydrocarbon conversion reactions.

Further, the binary oxide, when employed either as an adsorbent, ion-exchanger or as a catalyst in an organic compound conversion process should be dehydrated, at least partially. This can be done by heating to a temperature in the range of 200°C to 600°C in air or an inert atmosphere, such as nitrogen, etc. and at atmospheric, subatmospheric or superatmospheric pressures for between 30 minutes and 48 hours. Dehydration can also be performed at room temperature merely by placing the binary oxide in a vacuum, but a longer time is required to obtain a sufficient amount of dehydration. Therefore, depending upon the degree of dehydration or thermal treatment desired for the binary oxide, it may be subjected to heating at a temperature of from 200°C to 1000°C for a time of from 1 minute to 48 hours.

The crystals of the binary oxide prepared by the instant invention can be shaped into a wide variety of particle sizes. Generally speaking, the particles can be in the form of a powder, a granule, or a molded product, such as an extrudate having a particle size sufficient to pass through a 2 mesh (Tyler) screen and be retained on a 400 mesh (Tyler) screen. In cases where the composition is molded, such as by extrusion, the crystals can be extruded before drying or partially dried and then extruded.

When used as a catalyst, it may be desirable to incorporate the binary oxide with another material resistant to the temperatures and other condition employed in organic conversion processes. Such materials include active and inactive materials and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the binary oxide, i.e. combined therewith, which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated into naturally occurring clays, e.g. bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally occurring clays which can be composited with the crystal include the montmorillonite and kaolin families which include the subbentonites, and the kaolins commonly known as Dixie, McNamee, Georgia and Florida clays or others in which the main mineral constituent is halloysite, kaolinite, dickite, nacrite, or anauxite. Such clays can be used in the raw sate as originally mined or initially subjected to calcination, acid treatment or chemical modification. Binders useful for compositing with the present crystal also include inorganic oxides, notably alumina or silica.

In addition to the foregoing materials, the binary oxide crystal can be composited with a porous matrix material such as aluminum phosphate, silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline binary oxide material and inorganic oxide gel matrix very widely, with the crystal content ranging from 1 to 90 percent by weight and more usually, particularly when the composite is prepared in the form of beads or extrudates, in the range of 2 to 80 weight percent of the composite.

In order to more fully illustrate the nature of the invention and the manner of practicing same, the following examples are presented.

In the examples, when Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time) compared to that of the highly active silica-alumina cracking catalyst taken as an Alpha of 1 (Rate Constant = 0.016 $sec^{-1}$). In the case of zeolite HZSM-5, only 174 ppm of tetrahedrally coordinated $Al_2O_3$ are required to provide an Alpha Value of 1. The Alpha Test is described in U.S. Patent 3,3543,078 and in The Journal of Catalysis , Vol. IV, pp. 522-529 (August 1965).

When X-ray values are determined the radiation is the K-alpha doublet of copper and a diffractometer equipped with a scintillation counter and an associated computer is used. The peak heights, I, and the positions as a function of 2 theta, where theta is the Bragg angle, are determined using algorithms on the computer associated with the spectrometer. From these, the relative intensities, 100 $I/I_o$, where $I_o$ is the intensity of the strongest line or peak, and d (obs.) the interplanar spacing in Angstroms (A), corresponding

to the recorded lines, are determined. The relative intensities are given in terms of the strongest line being taken as 100. The various cationic forms of particular binary oxides reveal substantially the same pattern with some shifts in interplanar spacing and variation in relative intensity. Other variations can occur, depending on the Z/X ratio of the particular sample, as well as its degree of thermal treatment.

When ion-exchange capacity is examined, it is determined by titrating with a solution of sulfamic acid the gaseous ammonia evolved during the temperature programmed decomposition of the ammonium-form of the silicophosphoaluminate. The method is described in Thermochimica Acta, Vol. III, pp. 113-124, 1971 by G.T. Kerr and A.W. Chester.

## EXAMPLE 1

The synthesis of a binary oxide zeolite having the structure of ZSM-5 was carried out in the two-phase system. The aqueous phase of the two-phase system comprised 4.0 g $Al(NO_3)_3xH_2O$ dissolved in 35 g water to which was added 63 g TPAOH (40% in $H_2O$). Constituting the organic phase was 77.0 g $Si(OCH_3)_4$ dissolved in 35 g of 1-hexanol. The mixture was placed into an autoclave and heated to 180°C at 50°C/hour and kept there for 240 hours. The final product was filtered and washed. The X-ray diffraction pattern of the dried material proved it to be well-crystallized ZSM-5. Elemental analysis calculated from NMR data proved the ash residue of a 1000°C calcined sample to contain 98.1 wt. % $SiO_2$ and 1.9 wt. % $Al_2O_3$.

Following ammonium-exchange (1 M $NH_4Cl$, twice, 60°C, 20 ml/g zeolite) of a calcined product sample (450°C in nitrogen for 4 hours, followed by air-calcination), the ion-exchange capacity was determined by temperature programmed ammonia desorption (TPAD) and found to be equal to 0.26 meq/g. The calculated Si/Al ratio from the TGA analysis was 64, and from NMR analysis 60.4. The material had an Alpha Value of 23.2.

The product material of this example had a very unusual, yet desirable, morphology. It consisted of spheres (some filled, some hollow) 2-15 microns in size, which were made up of many very small crystallites (smaller than 1000 A). This morphology makes handling the sample easy (such as filtering etc.), yet the small crystallites favor the completion of diffusion-controlled reactions.

## EXAMPLE 2

The synthesis of Example 1 was repeated, except that the mixture was nucleated at 180°C for 24 hours, and crystallized at 200°C for 144 hours. The product material was filtered and dried. It had the same characteristic X-ray lines as the product of Example 1. The material was calcined at 450°C and ammonium-exchanged as described in Example 1. The chemical composition of the ash of a 1000°C calcined sample was 98.8 wt. % $SiO_2$ and 1.2 wt. % $Al_2O_3$.

Temperature-programmed desorption of ammonia indicated an exchange capacity of 0.29 meq/g for the product of this example. The Si/Al ratio from TPAD was 57.5, and from NMR 71.3. The sample had an Alpha Value of 23.5.

Again, the crystallite size from this example was small, but the observed particles were in the 1 micron range.

## EXAMPLE 3

The synthesis of Example 1 was repeated, except that the mixture contained 9.5 g $Al(NO_3)_3xH_2O$ in the aqueous phase, and 77.0 g $Si(OC_2H_5)_4$ in the water-immiscible 1-hexanol solvent phase. Also, it was nucleated at 180°C for 24 hours, and crystallized at 200°C for 144 hours. The product material was filtered and dried. It had the same characteristic X-ray line as the product of Example 1. The material was calcined at 450°C and ammonium-exchanged as in Example 1. The chemical composition of the ash of a 1000°C calcined sample was 96.7 wt. % $SiO_2$ and 3.3 wt. % $Al_2O_3$.

Temperature-programmed desorption of ammonia indicated an exchange capacity of 0.769 meq/g for the product of this example. The Si/Al ratio from TPAD was 20.8, and from NMR 24.9. The sample had an Alpha Value of 5.

The crystallite size from this example was very small. The agglomerates were irregular. There was some unreacted material present.

EXAMPLE 4

The synthesis of Example 2 was repeated, except that the mixture contained 35.0 g 1-heptanol as the water-immiscible solvent. The product material was filtered and dried. It had the same characteristic X-ray lines as the product of Example 1. The material was calcined and ammonium-exchanged as in Example 1. The chemical composition of the ash of a 1000°C calcined sample was 98.7 wt. % $SiO_2$ an 1.3 wt. % $Al_2O_3$.

Temperature-programmed desorption of ammonia indicated an exchange capacity of 0.27 meq/g for the produce of this example. The Si/Al ratio from TPAD was 60, and from NMR 66. The sample had an Alpha Value of 25.

The particle size of the product of this example was about 0.3 microns. The particles were partly made up of smaller crystallites.

EXAMPLE 5

The synthesis of Example 2 was repeated, except that the mixture contained 2.8 g $In(NO_3)_3xH_2O$ instead of the aluminum nitrate in the aqueous phase. The product material was filtered and dried. It had the same characteristic ZSM-5 X-ray lines as the product of Example 1. The material was calcined and ammonium-exchanged as in Example 1. The chemical composition of the ash of a 1000°C calcined sample was 79.3 wt. % $SiO_2$ and 1.5 wt. % $In_2O_3$. The ash residue also contained a small quantity, i.e. 85 ppm, of aluminum.

Temperature-programmed desorption of ammonia indicated an exchange capacity of 0.09 meq/g for the product of this example. The Si/In ratio from TPAD was 190.5. The sample had an Alpha Value of 1.0.

The particle size of the product from this example was about 0.2 microns. The particles were made of pure single crystals with almost cubic appearance.

EXAMPLE 6

The synthesis of Example 5 was repeated, except that the mixture contained 3.6 g $In(NO_3)_3xH_2O$ in the aqueous phase. The product material was filtered and dried. It had the same characteristic ZSM-5 X-ray lines as the product of Example 1. The material was calcined and ammonium-exchanged as described in Example 1. The chemical composition of the ash of a 1000°C calcined sample was 78.2 wt. % $SiO_2$ and 3.1 wt. % $In_2O_3$. The ash residue also contained a small quantity, i.e. 180 ppm, of aluminum.

Temperature-programmed desorption of ammonia indicated an exchange capacity of 0.21 meq/g for the product of this example. The Si/In ratio from TPAD was 77.9. The sample had an Alpha Value of 2.5.

The particle size of the product from this example was about 0.2 microns. The particles were made of crystals with almost cubic appearance. There were no impurities present.

EXAMPLES 7-11

The synthesis of Example 5 was repeated, except that the mixtures contained varying amounts of $In(NO_3)_3xH_2O$. Five preparations were made, with the following compositions:

| Example | 7 | 8 | 9 | 10 | 11 |
|---|---|---|---|---|---|
| Aqueous Phase(g) | | | | | |
| $H_2O$ | 40.0 | 40.0 | 35.0 | 40.0 | 40.0 |
| $In(NO_3)_3x3H_2O$ | 0.9 | 7.2 | 1.8 | 1.8 | 3.6 |
| TPAOH, 40% | 63.0 | 63.0 | 63.0 | 63.0 | 63.0 |
| Organic Phase(g) | | | | | |
| 1-Hexanol | 60.0 | 60.0 | 35.0 | 60.0 | 60.0 |
| $Si(OCH_3)_4$ | 77.0 | 77.0 | 77.0 | 77.0 | 77.0 |

The product materials were filtered and dried. They had the same characteristic ZSM-5 X-ray lines as the product of Example 1. The materials were calcined and ammonium-exchanged as in Example 1. Their properties were as follows:

| Example | 7 | 8 | 9 | 10 | 11 |
|---|---|---|---|---|---|
| $SiO_2$, wt. % | 84.0 | 77.5 | 80.5 | 76.7 | 82.5 |
| $In_2O_3$, wt. % | 0.67 | 5.1 | 1.58 | 1.31 | 2.92 |
| Al, ppm | 105 | 65 | 130 | 85 | 60 |
| Exchange Capacity, meq/g | 0.09 | 0.17 | 0.17 | 0.12 | 0.21 |
| Si/In (from TPAD) | 193 | 99 | 95 | 138 | 77 |
| Alpha Value | 1.5 | 1.6 | 1.0 | 1.0 | n.d. |
| Particle size | $<$2000A | $>$1 micr | $<$2000A | $<$2000A | $<$2000A |

EXAMPLE 12

The synthesis of a titano-aluminate was carried out in the two-phase system. The aqueous phase of the two-phase system comprised 11.6 g $NaAlO_2$ dissolved in 100 g water to which was added 16.2 g TEAOH (40% in $H_2O$). Constituting the organic phase was 40.0 g $Ti(OC_3H_7)_4$ dissolved in 40 g of 1-hexanol. The mixture was placed into an autoclave and heated to 180°C at 50°C/hour, and kept there for 48 hours. It was then heated to 230°C for 168 hours. The final product was filtered and washed. The diffraction pattern of the dried material is shown in Table 1. Chemical analysis of the as-synthesized material indicated 51.1 wt. % $TiO_2$ and 20.8 wt. % $Al_2O_3$.

TABLE 1

| Interplanar d-Spacings (A) | Observed 2 x Theta | Relative Intensities $I/I_o$ |
|---|---|---|
| 10.07575 | 8.776 | 29.2 |
| 9.62007 | 9.193 | 100.0 |
| 6.15489 | 14.391 | 24.2 |
| 4.80665 | 18.459 | 4.4 |
| 3.55015 | 25.084 | 17.6 |
| 3.16706 | 28.177 | 14.0 |
| 3.04383 | 29.343 | 42.2 |
| 2.59613 | 34.549 | 34.9 |

Following ammonium-exchange (1 M $NH_4Cl$, twice, 60°C, 20 ml/g solid) of a calcined product sample (450°C in nitrogen for 4 hours, followed by air-calcination), the ion-exchange capacity was determined by temperature programmed ammonia desoprtion and found to be equal to 0.94 meq/g. The material had an Alpha Value of 1.3.

## Claims

1. A method for synthesizing a crystalline binary oxide which comprises

(i) providing a reaction mixture capable of forming said crystalline binary oxide comprising water, a substantially water-immiscible organic solvent (So), a directing agent (D), a trivalent element (X) selected from the group consisting of $Al^{+3}$, $B^{+3}$, $Ga^{+3}$, $In^{+3}$, $Sb^{+3}$, $Bi^{+3}$, $Fe^{+3}$, $Cr^{+3}$, $Sc^{+3}$, $Y^{+3}$, $La^{+3}$, $Ti^{+3}$ and combinations thereof and quadrivalent element (Z) selected from the group consisting of $Si^{+4}$, $Ge^{+4}$, $Sn^{+4}$, $Ti^{+4}$, $Zr^{+4}$ and combinations thereof, the molar composition of said mixture, based on one mole of Z, being:

$H_2O$ = 0.5 to 50
So = 0.1 to 20
D = 0.005 to 30
X = 0.00002 to 0.2
Z = 1

wherein upon initial provision of said reaction mixture the source of at least one of X and Z is dispersed or dissolved in the substantially water-immiscible organic solvent,

(ii) heating said reaction mixture at a rate of 5°C to 200°C per hour to a temperature of 80°C to 300°C,

(iii) agitating the reaction mixture to admix the aqueous and organic phases,

(iv) maintaining said reaction mixture at said temperature of 80°C to 300°C until crystals of said binary oxide are formed, and

(v) recovering said crystalline binary oxide having a composition on an anhydrous basis as follows:

$A_v(Cat)_c[X_xZ_{1-x)}O_2]$

wherein A is occluded organic material residing in microporous voids of the binary oxide, v is moles of A, Cat is cations associated with the binary oxide, q is the average charge of Cat, x is a number less than or equal to 0.14 and c is x/q.

2. The method of claim 1 wherein said molar composition of said mixture, based on one mole of Z, is

$H_2O$ = 1.0 to 20
So = 0.2 to 10
D = 0.01 to 5
X = 0.00004 to 0.16
Z = 1.

3. The method of claim 1 or claim 2 which comprises the additional step of heating the recovered crystalline binary oxide at a temperature of 200°C to 1000°C.

4. The method of any preceding claim which comprises the additional step of replacing original cations (Cat) of the recovered binary oxide with a different cation selected from the hydrogen, hydrogen precursor, rare earth metal and metal of Groups IIA, IIIA, IVA, IB, IIB, IIIB, VIB and VIII of the Periodic Table.

5. The method of any preceding claim wherein the recovered crystalline binary oxide is combined with a binder material.

6. The method of any preceding claim wherein the recovered binary oxide has the structure of ZSM-5.

The method of any preceding claim wherein the binary oxide comprises indium as element X.